(19) Europäisches Patentamt
European Patent Office
Office européen des brevets

(11) **EP 2 567 074 B1**

(12) **EUROPÄISCHE PATENTSCHRIFT**

(45) Veröffentlichungstag und Bekanntmachung des Hinweises auf die Patenterteilung:
**21.02.2018   Patentblatt 2018/08**

(21) Anmeldenummer: **11720722.5**

(22) Anmeldetag: **20.04.2011**

(51) Int Cl.:
**F01K 25/08** *(2006.01)*      **F01K 13/02** *(2006.01)*

(86) Internationale Anmeldenummer:
**PCT/EP2011/002023**

(87) Internationale Veröffentlichungsnummer:
**WO 2011/137980 (10.11.2011 Gazette 2011/45)**

(54) **REGELUNG EINES THERMISCHEN KREISPROZESSES**

CONTROL OF A THERMAL CYCLIC PROCESS

RÉGULATION D'UN PROCESSUS CYCLIQUE THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2010   DE 102010019718**

(43) Veröffentlichungstag der Anmeldung:
**13.03.2013   Patentblatt 2013/11**

(73) Patentinhaber: **Orcan Energy AG**
**81379 München (DE)**

(72) Erfinder: **QUOILIN, Sylvain**
**B-4000 Liège (BE)**

(74) Vertreter: **Grünecker Patent- und Rechtsanwälte PartG mbB**
**Leopoldstraße 4**
**80802 München (DE)**

(56) Entgegenhaltungen:
**WO-A1-2009/041346      WO-A1-2011/093850**
**US-A- 4 178 762      US-A- 6 134 891**
**US-A1- 2009 099 667**

**Beschreibung**

Gebiet der Erfindung

Die Erfindung betrifft ein Verfahren und eine Vorrichtung zur Regelung eines thermischen Kreisprozesses, insbesondere eines ORC-Systems.

Hintergrund der Erfindung

Der Organic Rankine Cycle (ORC) ist ein Verfahren des Betriebs eines Dampfkraftprozesses mit einem anderen Arbeitsmedium als Wasserdampf. Als Arbeitsmedium werden organische Flüssigkeiten mit einer niedrigen Verdampfungstemperatur verwendet. Das Verfahren kommt vor allem dann zum Einsatz, wenn das zur Verfügung stehende Temperaturgefälle zwischen Wärmequelle und -senke zu niedrig für den Betrieb einer von Wasserdampf angetriebenen Turbine ist. Dies ist beispielsweise bei der Stromerzeugung mit Hilfe der Geothermie, der Kraft-Wärme-Kopplung sowie bei Solarkraftwerken und Meereswärmekraftwerken der Fall. Der Organic Rankine Cycle ähnelt stark dem aus der Kraftwerkstechnik bekannten Clausius-Rankine-Cycle, dem Vergleichsprozess des Dampfkraftprozesses. Der im Organic Rankine Cycle eingesetzte organische Stoff als Arbeitsmedium erlaubt eine sehr gute Anpassung des Kreislaufes an die Temperatur der Wärmequelle. Je nach Temperaturniveau kommen unterschiedliche Arbeitsmedien zum Einsatz: Kohlenwasserstoffe, fluorierte Kohlen(wasser)stoffe (beispielsweise Tetrafluorethan), aromatische Kohlenwasserstoffe oder Silikonöle.

Eine Pumpe bringt das flüssige Arbeitsmedium auf Betriebsdruck und leistet dabei Verschiebe- und Druckänderungsarbeit. Beim Durchströmen des flüssigen Arbeitsmediums durch einen Verdampfer wird diesem isotherm Energie in Form von Wärme zugeführt. Vor dem Verdampfer kann das Arbeitsmedium in einem Vorwärmer auf Siedetemperatur gebracht werden. Nach dem Verdampfer kann der Dampf des Arbeitsmediums weiter überhitzt werden. Aus thermodynamischen Gründen kann man aber auf die flächenintensive Überhitzung verzichten und man wählt - wenn überhaupt - dann eine nur geringfügige Überhitzung um einige Kelvin.

Die entsprechenden Bauteile Vorwärmer, Verdampfer und Überhitzer können zu einem einzigen Wärmeübertragerbauteil zusammengefasst werden. In diesem Wärmeübertrager kann die zugeführte Wärme sowohl zur Vorwärmung, Verdampfung und evtl. Überhitzung genutzt werden.

Als Wärmequelle für den Verdampfungsprozess dient dabei Prozesswärme bzw. Abwärme von vorgeschalteten Maschinen wie z.B. einer Verbrennungskraftmaschine. Durch den Energieeintrag verdampft das Arbeitsmedium vollständig oder nahezu vollständig. Am Austritt des Verdampfers entsteht Sattdampf. Das Arbeitsmedium kann auch teilverdampft austreten. Realistisch ist der Austritt als Sattdampf oder als geringfügig überhitzter Dampf.

Vom Verdampfer aus strömt der Dampf des Arbeitsmediums über ein Druckrohr zum ORC-Expander (beispielsweise Schraubenexpander oder Turbine) wo dieser polytrop auf einen niedrigeren Druck entspannt wird, wodurch Arbeit geleistet wird, welche z.B. durch die Turbine an ihren Schaufeln in mechanische Energie umgewandelt wird. Im idealen Vergleichsprozess, d.h. ohne Verluste und Irreversibiltäten, wäre die Entspannung isentrop. Ein an den Expander / die Turbine gekoppelter Generator wandelt die mechanische Energie in elektrische Energie um. Alternativ dazu kann die mechanische Energie auch direkt genutzt werden, z.B. in das Antriebssystem eines Fahrzeugs (mechanisch) eingekoppelt werden, oder es wird die mechanische Energie in hydraulische Energie gewandelt und in ein Hydrauliksystem eingespeist.

Im Anschluss daran strömt der Dampf durch einen nachgeschalteten Kondensator. Dort gibt der Dampf die Kondensationswärme und ggf. auch sensible Wärme durch Enthitzung an einen Kühlkreislauf mit einem Kühlmedienstrom ab. Das Arbeitsmedium kondensiert aus und geht in den flüssigen Aggregatzustand über. Durch charakteristische thermodynamische Eigenschaften tritt das Arbeitsmedium meist überhitzt aus der Expansionsmaschine aus und wird somit im Kondensator zuerst enthitzt und dann kondensiert. Je nach Verschaltung kann eine geringfügige Unterkühlung des Arbeitsmediums erzielt werden. Das gesättigte flüssige oder geringfügig unterkühlte Arbeitsmedium kann z.B. in einem Vorlagebehälter zwischengespeichert werden. Die Pumpe bringt dann das gesättigte oder (geringfügig) unterkühlte Arbeitsmedium aus dem Vorlagebehälter wieder auf Betriebsdruck, und damit schließt sich der Kreislauf.

Stand der Technik

Bevor die Erfindung beschrieben wird, soll auf den Stand der Technik im Kraftwerksbereich und in der Abwärmenutzung eingegangen werden.

*Bisherige Regelung von Kraftwerken im Netzverbund*

Im Stromnetz muss stets ein Gleichgewicht von erzeugter und nachgefragter Energie herrschen. Ist das Stromangebot zu hoch bzw. die Nachfrage zu gering, so erhöht sich die Netzfrequenz, bei zu geringem Stromangebot und hoher Nachfrage ist das Gegenteil der Fall. Um einen Ausgleich an erzeugter und nachgefragter Energie zu schaffen, wird als Führungsgröße die Netzfrequenz verwendet. Bei einer Abweichung der Frequenz tritt zuerst die Primärregelung in Kraft. Durch Aktivierung der Sekundenreserve wird im Kraftwerk innerhalb von 0-30s eine festgelegte Leistungsreserve, z.B. durch Aufhebung einer Androsselung des Frischdampfs in der Zuleitung zur Turbine, automatisch realisiert. Bei der Sekundärregelung werden dann die Leistungssollwerte angehoben und der Brennstoffmassenstrom angepasst. Diese Laständerungen bewegen sich aber bei thermischen Kraftwerken im Bereich von >15min, da diese Kraftwerke sehr träge reagieren. Schneller reagieren Gasturbinenkraftwerke, hier geht eine Erhöhung des Brennstoffmassenstroms fast instantan in eine Leistungssteigerung über (vgl. Flugzeugtriebwerk beim Start).

Bei diesen Kraftwerken kann eine feste Optimierung des Betriebspunkts angenommen werden, eine stete Optimierung des Betriebsverhaltens ist nicht notwendig, da die Betriebsparameter nicht in weiten Bereichen schwanken.

Eine Analogie zur Abwärmenutzung durch ORC stellt die Nutzung von Gasturbinenabwärme in Abhitzedampferzeugern dar (Combined Cycle bzw. GuD-Prozess). Da in letzter Zeit die fluktuierende Einspeisung elektrischer Energie ins Stromnetz zunimmt, muss diese Art von Kraftwerk zunehmend Regelaufgaben übernehmen und schnelle Lastwechsel vornehmen.

Als Sollwert wird hier eine feste Frischdampftemperatur angenommen, um z.B. die thermische Belastung der Komponenten aufgrund von Temperaturwechseln zu reduzieren.

*Bisherige Regelung von Abhitzedampferzeugern*

Bei Untersuchungen zur Verbesserung der Regelung von Abhitzedampferzeugern stellte sich als große Herausforderung beim Betrieb von Zwangdurchlauf-Abhitzedampferzeugern die Einstellung einer festen Dampfqualität am Auslass heraus. Da der Massenstrom des Rauchgases fest ist, hat man nur die Möglichkeit mit der Drehzahl der Speisepumpe den Massenstrom des zu verdampfenden Wassers einzustellen. Besonders beim Anfahren ergeben sich hier aus der Trägheit des Systems heraus Probleme. So kann z.B. die Totzeit des Systems die Regelung stören oder auch die Wärmekapazitäten können diese negativ beeinflussen. Der Wärmeübertrager wird hierbei häufig "überspeist", d.h. am Ende des Verdampfers liegt noch flüssiges Wasser vor. Aus diesem Grund werden Wasserabscheider, sogenannte Anfahrflaschen eingesetzt.

Neben konstruktiven Maßnahmen zur Verbesserung des Regelverhaltens kann ein sogenanntes Modellprädiktives Verfahren als Basis der Prozessregelung angesetzt werden. Die Modellprädiktive Regelung (MPC) bildet das zu regelnde System mit Modellgleichungen ab. Bei der MPC wird nicht nur der aktuelle Zustand des Systems betrachtet, sondern es wird auch berechnet wie das Systems in der Zukunft sein wird und wiederum mit dem gewünschten Zustand verglichen. In einem konkreten Beispiel wurde eine Energiebilanz des Verdampfers aufgestellt und berechnet, welcher Massenstrom eintreten muss, damit eine gewisse Dampfqualität erreicht werden kann. Dazu müssen neben dem Massenstrom und den Parametern des Wassers auch der Massenstrom und die Parameter der Wärmequelle berücksichtigt werden, weiterhin werden Ein- und Ausspeichereffekte aufgrund der Wärmekapazitäten der Rohrleitungen berücksichtigt.

Bei dieser Art der Regelung muss der Regler nicht mehr auf die Änderung der Führungsgröße warten, sondern kann ausgehend von der Führungsgröße berechnen, welche Stellgröße notwendig ist, um einen neuen Sollwert, z.B. eine andere Frischdampftemperatur zu erreichen. Diese Untersuchungen beschäftigten sich jedoch nicht mit der Abstimmung der Betriebsparameter hinsichtlich einer Wirkungsgradoptimierung, als Stellgröße wurden feste Dampfparameter, die zu erreichen sind, angesetzt. Wenn überhaupt, werden diese Dampfparameter von einer übergeordneten Regelung vorgegeben, eine dynamische Anpassung an unterschiedliche, sich im Sekunden- oder Minutenbereich ändernde Last ist nicht vorgesehen.

*Bisherige Regelung von ORC-Anlagen*

ORC Anlagen werden derzeit noch nicht an dynamischen Abwärmequellen eingesetzt. Bei der Nutzung von Abwärme aus nicht dynamischen Quellen können optimale Betriebsparameter für den ORC einmalig bestimmt werden und dann als Zielgröße für die Regelung festgelegt werden. Diese Regelstrategie ist ähnlich zu den im Kraftwerksbereich angewandten Festdruckregelungen. Die aus der Kraftwerkstechnik bekannte Gleitdruckregelung hat bei hohen Temperaturen des Dampfes den Vorteil, dass im Teillastfall aufgrund der Veränderung des Drucks relativ konstante Dampftemperaturen erreicht werden. Dies trägt zur Schonung der Bauteile gegen thermisch induzierte Spannungen bei, dies ist aber für Organic Rankine Cycle aufgrund der niedrigen Temperaturen bei der Abwärmenutzung irrelevant.

Wird die erwähnte Festdruckregelung ohne Androsselung des Frischdampfes z.B. durch eine drehzahlvariable Expansionsmaschine realisiert, so führt dies bei einer dynamischen Wärmequelle (variable Temperatur und Wärmekapazitätsstrom) zwar zu einem gleichbleibenden thermischen Kreislaufwirkungsgrad, jedoch wird der Wärmeübertragerwirkungsgrad dabei nicht beachtet und so ist der Systemwirkungsgrad nicht optimal (nämlich um bis zu 10 % schlechter als bei der nachfolgend vorgestellten Erfindung). Als Systemwirkungsgrad bezeichnet man den Quotienten aus der generierten Leistung des ORCs und der Wärmeleistung der Wärmequelle, bezogen auf eine vollständige Abkühlung der Wärmequelle auf Umgebungstemperaturniveau. Der Systemwirkungsgrad entspricht dem Produkt aus Wärmeübertragungswirkungsgrad und thermischem Kreislaufwirkungsgrad.

Das Dokument US 2009/099667 A1 offenbart eine Steuereinrichtung für eine Anlage mit einem Betriebssignal, welches der Anlage zugeführt wird, wobei die Steuerung ein Modell zur Vorhersage eines Wertes eines Messsignals umfasst, welches erhalten wird, wenn das Betriebssignal der Anlage zugeführt wird, und wobei weiterhin ein Zielmodellausgabewert bestimmt wird, und zwar durch Verwenden des Messsignals von der Anlage und eines Messsignalgrenzwerts, der zuvor gesetzt wurde, wobei eine Lernvorrichtung vorgesehen ist, die ein Verfahren zur Erzeugung eines Modellinputs erlernt.

Beschreibung der Erfindung

Angesichts der Nachteile des Stands der Technik, liegt der Erfindung das Problem zugrunde, eine Regelung eines thermischen Kreisprozesses, insbesondere eines ORCs zur Verfügung zu stellen, mit dem sich (vorzugsweise zu jedem Zeitpunkt) ein auf den Systemwirkungsgrad optimierter Betrieb einstellen lässt.

Das genannte Problem wird gelöst durch das Verfahren nach Anspruch 1, die Vorrichtung nach Anspruch 9 und das Computerprogrammprodukt nach Anspruch 10. Vorteilhafte Weiterbildungen sind in den abhängigen Ansprüchen definiert.

Unter einer dynamischen Abwärmequelle versteht man eine Wärmequelle, deren Wärmeleistung aufgrund einer Veränderung des die Wärme beinhaltenden Massenstroms, und/oder der Temperatur und/oder der Wärmekapazität schwankt. Der thermische Kreisprozess bezieht dabei Energie aus der dynamischen Wärmequelle, d.h. die dem Kreisprozess zugeführte Wärmemenge pro Zeiteinheit kann veränderlich, also zeitlich variabel sein.

In Abhängigkeit von gemessenen Werten des oder der Eingangsparameter wird ein Sollwert einer Prozessgröße ermittelt, wobei der Zusammenhang zwischen Sollwert der Prozessgröße und dem oder den Werten der Eingangsgrößen einmalig zuvor bestimmt wurde. Dieser vorbestimmte Zusammenhang (vorbestimmte Verknüpfung oder mathematischen Abbildung zwischen Werten der Eingangsparameter und Werten der Prozessgrößen) ist hinsichtlich einer verbesserten Energieausbeute des Systems (Systemwirkungsgrad) optimiert. Ein aufwändiges Lösen von Modellgleichungen ist während des Betriebs des thermischen Kreisprozesses nicht erforderlich, was vorteilhaft ist. Mit dem ermittelten Sollwert der Prozessgröße wird dann der thermische Kreisprozess so geregelt, dass ein Wert der Prozessgröße dem Sollwert zustrebt. Dies kann beispielsweise dadurch erfolgen, dass die Drehzahlen von Speisepumpe, Expansionsmaschine und Kondensatorlüfter entsprechend vorbestimmten Werten eingestellt werden, so dass der Sollwert der Prozessgröße bzw. dieser Prozessgrößen schnell und sicher erreicht werden.

Im Falle einer Änderung von Werten der Eingangsparameter kann schnell darauf reagiert werden, indem die Schritte des Ermittelns des Sollwerts und der nachfolgenden entsprechenden Regelung erneut durchgeführt werden.

Eine Weiterbildung des erfindungsgemäßen Verfahrens besteht darin, dass das Ermitteln des Sollwerts der Prozessgröße des thermischen Kreisprozesses ein Berechnen des Sollwerts aus einer vorbestimmten Funktion, insbesondere einer Polynomfunktion, in der die Eingangsparameter als Variablen eingehen, umfassen kann.

Eine andere Weiterbildung besteht darin, dass ein Bestimmen der Funktion zum Berechnen des Sollwerts der Prozessgröße mittels Durchführen von Versuchen und/oder aus Modellgleichungen als weiterer Schritt vor dem Schritt (a) durchgeführt werden kann.

Eine andere Weiterbildung besteht darin, dass das Bestimmen der Funktion zum Berechnen des Sollwerts der Prozessgröße ein Maximieren des Produktes aus einem Wirkungsgrad der Wärmeübertragung von der Wärmequelle auf den Kreisprozess und einem Wirkungsgrad des Kreisprozesses umfassen kann.

Eine andere Weiterbildung des erfindungsgemäßen Verfahrens besteht darin, dass das Ermitteln des Sollwerts der Prozessgröße des thermischen Kreisprozesses mittels Auslesen des Sollwerts aus einer vorbestimmten Tabelle in Abhängigkeit von einem Wert eines Eingangsparameters oder jeweiligen Werten mehrerer Eingangsparameter des thermischen Kreisprozesses erfolgen kann, wobei ggf. zwischen den Tabellenwerten interpoliert werden kann.

Eine andere Weiterbildung besteht darin, dass ein Bestimmen der Tabelle zum Berechnen des Sollwerts der Prozessgröße mittels Durchführen von Versuchen und/oder aus Modellgleichungen als weiterer Schritt vor dem Schritt (a) durchgeführt werden kann.

Eine andere Weiterbildung besteht darin, dass das Bestimmen der Tabelle zum Berechnen des Sollwerts der Prozessgröße ein Maximieren des Produktes aus einem Wirkungsgrad der Wärmeübertragung von der Wärmequelle auf den Kreisprozess und einem Wirkungsgrad des Kreisprozesses umfassen kann.

Eine andere Weiterbildung besteht darin, dass wenigstens eine weitere Prozessgröße entsprechend dem erfindungsgemäßen Verfahren geregelt wird.

Eine andere Weiterbildung besteht darin, dass das Regeln des thermischen Kreisprozesses mittels modellprädikativer Regelung (MPC) durchgeführt werden kann.

Eine andere Weiterbildung besteht darin, dass das Regeln des thermischen Kreisprozesses mittels Einstellen einer Drehzahl einer Speisepumpe und/oder einer Expansionsmaschine und/oder eines Kondensatorlüfters erfolgen kann.

Eine andere Weiterbildung besteht darin, dass das Regeln ein wiederholtes oder ein kontinuierliches Vergleichen eines Istwerts mit dem Sollwert der Prozessgröße umfassen kann.

Die oben genannte Aufgabe der Erfindung wird weiterhin gelöst durch eine Vorrichtung zum Regeln eines thermischen Kreisprozesses, insbesondere eines ORC, welcher einen Mikroprozessor zum Durchführen des erfindungsgemäßen Verfahrens oder einer seiner Weiterbildungen und einen thermischen Kreisprozess, insbesondere einen ORC, mit einem oder mehreren Wärmeübertragern zum Übertragen von Wärme von einer oder mehrerer Wärmequellen auf ein Arbeitsmedium des thermischen Kreisprozesses umfasst.

Die oben genannte Aufgabe der Erfindung wird ebenfalls gelöst durch ein Computerprogrammprodukt, umfassend wenigstens ein computerlesbares Medium mit durch einen Computer ausführbaren Anweisungen zum Durchführen der Schritte des erfindungsgemäßen Verfahrens oder einer seiner Weiterbildungen beim Betrieb auf einem Computer.

Die verschiedenen Weiterbildungen lassen sich unabhängig voneinander einsetzen oder miteinander kombinieren.

Weitere bevorzugte Ausführungsformen der Erfindung werden im Nachfolgenden unter Bezugnahme auf die Zeichnungen beschrieben.

Kurzbeschreibung der Zeichnungen

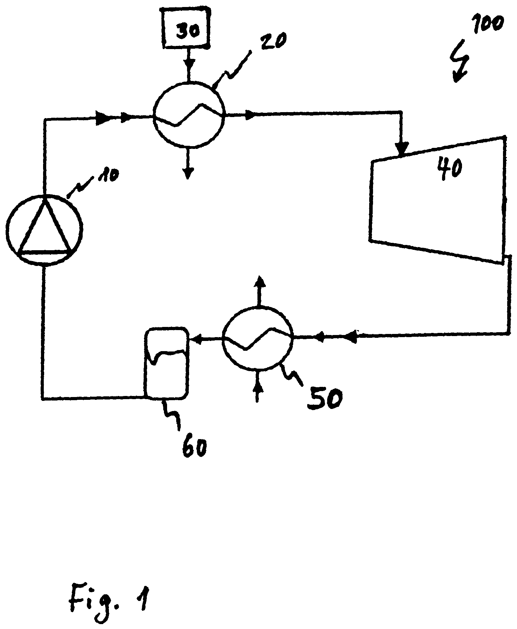

Fig. 1    zeigt schematisch ein ORC System.

Beschreibung der Ausführungsformen

Die Figur 1 zeigt auf schematische Weise ein System welches einen Organic Rankine Cycle 100 beinhaltet.

Eine Pumpe / Speisepumpe 10 bringt das flüssige Arbeitsmedium auf Betriebsdruck. Beim Durchströmen des flüssigen Arbeitsmediums durch einen Verdampfer 20 wird dem Arbeitsmedium Wärme von einer Wärmequelle 30 zugeführt. Durch den Energieeintrag wird das Arbeitsmedium vorgewärmt und teilweise oder vollständig verdampft und ggf. überhitzt. Am Austritt des Verdampfers 20 entsteht in der Regel Sattdampf oder aber Nassdampf oder überhitzter Dampf. Vom Verdampfer 20 aus strömt der Dampf des Arbeitsmediums über ein Druckrohr zur Expansionsmaschine 40 wo dieser auf einen niedrigeren Druck entspannt wird, wodurch Arbeit geleistet wird, welche durch die Expansionsmaschine 40 in mechanische Energie umgewandelt wird und dann beispielsweise mittels eines daran gekoppelten Generators weiter in elektrische Energie umgewandelt wird, oder in anderer Form genutzt wird, z.B. durch den direkten Antrieb von mechanischen Verbrauchern oder dem Antrieb einer Hydraulikpumpe. Dann strömt der Dampf durch einen Kondensator 50, wo der Dampf die sensible Wärme und die Kondensationswärme an einen Kühlkreislauf mit einem Kühlmedienstrom abgibt. Das Arbeitsmedium kondensiert aus und geht vollständig in den flüssigen Aggregatzustand über. Das gesättigte flüssige oder unterkühlte Arbeitsmedium wird im Vorlagebehälter 60 zwischengespeichert. Die Pumpe 10 bringt dann das gesättigte Arbeitsmedium aus dem Vorlagebehälter 60 wieder auf Betriebsdruck, und damit schließt sich der Kreislauf.

*Ansatz der Erfindung*

Gegenstand der Erfindung ist ein Konzept zur Regelung des Organic Rankine Cycle 100 oder auch eines anderen Kreisprozesses in Verbindung mit einer hochdynamischen Abwärmequelle 30. Unter einer dynamischen Abwärmequelle versteht man ganz allgemein eine Wärmequelle, deren Wärmeleistung aufgrund einer Veränderung des die Wärme beinhaltenden Massenstroms, und/oder der Temperatur und/oder der Wärmekapazität im zeitlichen Verlauf schwankt. Beispielsweise werden insbesondere solche Wärmequellen als dynamisch bzw. hochdynamisch angesehen, bei denen sich eine Wärmeleistung W1 bei einer Zeit t1 um mehr als 25%, mehr als 50% oder sogar mehr als 75% der Wärmeleistung W1 auf eine Wärmeleitung W2 bei einer Zeit t2 ändern kann, wobei die Zeitdifferenz t2-t1 weniger als eine Stunde, weniger als zehn Minuten, weniger als einer Minute, weniger als einer Sekunde sein oder weniger als 0,1 Sekunden sein kann.

Das ORC-System besteht aus unterschiedlichen Komponenten, die unterschiedlich Einfluss auf den Wirkungsgrad nehmen. So besitzen die Komponenten einen unterschiedlichen, meist nichtlinearen Verlauf des Wirkungsgrads im Teillastfall, einige Stellgrößen besitzen einen konträren Einfluss auf den Wirkungsgrad. Als Beispiel sei hier der Kondensator 50 genannt. Wird der Kondensator 50 aufgrund eines höheren Luftdurchsatzes besser gekühlt, so steigt der Wirkungsgrad des Kreisprozesses, d.h. es kann mehr Energie ($P_{el, brutto}$) umgewandelt werden. Im Gegenzug steigt jedoch der Eigenbedarf ($P_{el,\ Eigenbedarf}$), in welchem die für den Lüfter aufzuwendende Energie enthalten ist. Eine weitere äußerst wichtige Komponente ist der Wärmeübertrager / Verdampfer 20, in welchem die Abwärme auf das ORC Arbeitsmedium übertragen wird. Durch die Regeleingriffe an der Speisepumpe / Pumpe 10 und der Expansionsmaschine 40 verändert sich die durch den Wärmeübertrager 20 von der Abwärmequelle 30 auf den ORC 100 übertragene Wärmeleistung $\dot{Q}_{übertrageneWärme}$ signifikant.

Das erfindungsgemäße Regelkonzept ermöglicht es, den ORC 100 im optimalen Betriebspunkt zu fahren, wobei das Optimierungskriterium der sogenannte Systemwirkungsgrad $\eta_{system}$ ist, welcher sich aus der Wirksamkeit der Wärmeübertragung $\eta_{WÜ}$ und dem Kreislaufwirkungsgrad $\eta_{th,\ netto}$ des ORC 100 zusammensetzt. Diese beiden Teilwirkungsgrade sind nicht unabhängig voneinander. So kann eine Erhöhung des Kreislaufwirkungsgrades, den Wärmeübertragungswirkungsgrad soweit verschlechtern, dass sich das Produkt der beiden Wirkungsgrade

$$\eta_{System} = \eta_{WÜ} \cdot \eta_{th,netto} = \eta_{WÜ} \cdot \frac{P_{el,brutto} - P_{el,Eigenbedarf}}{\dot{Q}_{übertrageneWärme}}$$

dennoch verringert.

Gemäß der Erfindung wird die Regelung eines thermischen Kreisprozesses, insbesondere eines ORCs mit einer Modellbasierten Regelung so durchgeführt, dass sich ein auf den Systemwirkungsgrad optimierter Betrieb einstellt. Die Problematik, die erfindungsgemäß unter anderem gelöst wird, ist, dass eine Online-Optimierungsrechnung sich nicht ausreichend schnell darstellen lässt, da diese eine Vielzahl von Parametern berücksichtigen müsste.

Als Eingangsgrößen stehen der Massenstrom des Abgases von der Wärmequelle (oder andere Größen die die Bestimmung des Massenstroms erlauben wie z.B. die Drehzahl eines Verbrennungsmotors) und dessen Temperatur sowie die Temperatur der Außenluft zur Verfügung. Verändert werden können die Drehzahl der Speisepumpe, die Drehzahl des Lüftermotors des Kondensators sowie die Drehzahl der Expansionsmaschine, wobei die Auswirkungen von Änderungen teilweise komplex sind (z.B. Wärmeübergänge, Veränderung der Drucklage bei der die Verdampfung stattfindet, Veränderliche Flächenanteile für Vorwärmung und Verdampfung) und häufig nur iterativ berechnet werden können.

Der Regler soll erfindungsgemäß nicht während des ORC-Betriebs eine Optimierung für einen gegebenen Lastpunkt durchführen, sondern aufgrund hinterlegter Daten bereits "wissen" welche Drehzahlen die einzelnen Aggregate fahren sollen um eine maximale Energieausbeute bei den aktuellen Parametern der Wärmequelle zu bekommen. Der Ansatz ist nun so, dass das System in einer Simulationsumgebung abgebildet wird, wobei das reale Verhalten der Komponenten bei Laständerung abgebildet wird. Das Verhalten der Komponenten kann aus Versuchen abgeleitet werden oder auch aus der Literatur (Modellgleichung, Korrelationen) bekannt sein.

Es kann nun beispielsweise die optimale Verdampfungstemperatur in Abhängigkeit von Massenstrom und Temperatur der Wärmequelle sowie der Kondensationstemperatur berechnet werden. Für die gefundenen optimalen Verdampfungstemperaturen wird nun eine Ausgleichsfunktion definiert (z.B. ein Polynom), die es erlaubt die Verdampfungstemperatur direkt und ohne die Modellgleichungen für die Einzelkomponenten aus den Parametern des Wärmestroms und der Parameter der Kondensation zu bestimmen. Die so berechnete Verdampfungstemperatur kann nun als Stellgröße für die MPC verwendet werden.

Die Regelung errechnet also im ersten Schritt aus einer vorbestimmten Verknüpfung oder mathematischen Abbildung zwischen Werten der Eingangsparameter und Werten der Prozessgrößen, welche Werte des oder der Prozessgrößen (Sollwerte) einen optimierten Betrieb erlauben und stellt dann die Drehzahlen von Speisepumpe, Expansionsmaschine und Kondensatorlüfter so ein, dass diese Prozessgrößen schnell und sicher erreicht werden. Durch einen kontinuierlichen Vergleich von Soll- und Ist-Zustand wird auch hier schnell reagiert, wobei der zukünftige Ist-Zustand in der Regelung mit berücksichtigt wird. Im Vergleich zu einer konventionellen Regelung mit festen Verdampfungstemperaturen liegt der SystemWirkungsgrad im Mittel relativ bis zu ca. 10 % höher.

Zusammenfassend kann festgehalten werden, dass eine Modellprädikative Regelung mit festen Sollwerten (z.B. Festdruckregelung) gemäß dem Stand der Technik zwar eine schnelle Regelung erlaubt, darin aber keine Optimierung des Betriebspunktes stattfindet. Zudem sind Online-Optimierungen sehr rechenaufwändig und für hochtransiente Prozesse zu langsam. Dagegen ist die erfindungsgemäße Bestimmung der optimalen Prozessgrößen im Voraus und die Ermittlung einer Funktion zur Berechnung der Prozessgrößen in Abhängigkeit der Eingangsparameter schnell und kostengünstig. Eine Verbindung dieser beiden Konzepte erlaubt eine einfache, günstige und auf den Systemwirkungsgrad optimierte Regelung, die im Vergleich zu konventionellen Konzepten ca. 10 % mehr Energieausbeute ohne zusätzliche Kosten erlaubt.

**Patentansprüche**

1. Verfahren zur Regelung eines thermischen Kreisprozesses, insbesondere eines Organic Rankine Cycle (ORC), welcher mit einem Arbeitsmedium und in Verbindung mit einer dynamischen Wärmequelle betrieben wird, umfassend:

   (a) Ermitteln eines Sollwerts einer Prozessgröße des thermischen Kreisprozesses aus einem Wert eines Eingangsparameters oder jeweiligen Werten mehrerer Eingangsparameter des thermischen Kreisprozesses;
   (b) Regeln des thermischen Kreisprozesses mit dem ermittelten Sollwert der Prozessgröße als Zielgröße der Regelung; und
   (c) wiederholtes Durchführen der Schritte (a) und (b) bei Änderung wenigstens eines Werts der Eingangsparameter;

   wobei der bzw. die Eingangsparameter einen Massenstrom eines Gases von der Wärmequelle oder eine für diesen Massenstrom repräsentative Größe und/oder eine Temperatur des Gases und/oder eine Temperatur der Außenluft und/oder eine Kondensationstemperatur des Arbeitsmediums des Kreisprozesses umfasst bzw. umfassen; und wobei die Prozessgröße bzw. die Prozessgrößen die Verdampfungstemperatur oder der Verdampfungsdruck des Arbeitsmediums und/oder die Kondensationstemperatur oder der Kondensationsdruck im einem Kondensator des thermischen Kreisprozesses und/ oder die Dampftemperatur oder der Dampfdruck am Auslass einer Expansionsmaschine des thermischen Kreisprozesses ist bzw. sind.

2. Verfahren nach Anspruch 1, wobei das Ermitteln des Sollwerts der Prozessgröße des thermischen Kreisprozesses ein Berechnen des Sollwerts aus einer vorbestimmten Funktion, insbesondere einer Polynomfunktion, in der die Eingangsparameter als Variablen eingehen, umfasst; oder wobei das Ermitteln des Sollwerts der Prozessgröße des thermischen Kreisprozesses ein Auslesen des Sollwerts aus einer vorbestimmten Tabelle in Abhängigkeit von einem Wert eines Eingangsparameters oder jeweiligen Werten mehrerer Eingangsparameter des thermischen Kreisprozesses umfasst, wobei vorzugsweise zwischen den Tabellenwerten interpoliert oder extrapoliert wird..

3. Verfahren nach Anspruch 2, mit dem vor dem Schritt (a) durchgeführten weiteren Schritt:

   Bestimmen der Funktion zum Berechnen des Sollwerts der Prozessgröße mittels Durchführen von Versuchen und/oder aus Modellgleichungen; bzw. Bestimmen der Tabelle zum Ermitteln des Sollwerts der Prozessgröße mittels Durchführen von Versuchen und/oder aus Modellgleichungen.

4. Verfahren nach Anspruch 3, wobei das Bestimmen der Funktion zum Berechnen des Sollwerts der Prozessgröße ein Maximieren des Produktes aus einem Wirkungsgrad der Wärmeübertragung von der Wärmequelle auf den Kreisprozess und einem Wirkungsgrad des Kreisprozesses umfasst; bzw. wobei das Bestimmen der Tabelle zum Ermitteln des Sollwerts der Prozessgröße ein Maximieren des Produktes aus einem Wirkungsgrad der Wärmeübertragung von der Wärmequelle auf den Kreisprozess und einem Wirkungsgrad des Kreisprozesses umfasst.

5. Verfahren nach einem der Ansprüche 1 bis 4, wobei wenigstens eine weitere Prozessgröße in entsprechender Weise geregelt wird.

6. Verfahren nach einem der Ansprüche 1 bis 5, wobei das Regeln des thermischen Kreisprozesses mittels modellprädikativer Regelung (MPC) durchgeführt wird.

7. Verfahren nach einem der Ansprüche 1 bis 6, wobei das Regeln des thermischen Kreisprozesses mittels Einstellen einer Drehzahl einer Speisepumpe und/oder einer Expansionsmaschine und/oder eines Kondensatorlüfters erfolgt.

8. Verfahren nach einem der Ansprüche 1 bis 7, wobei das Regeln ein wiederholtes oder ein kontinuierliches Vergleichen eines Istwerts mit dem Sollwert der Prozessgröße umfasst.

9. Vorrichtung, umfassend:

   einen thermischen Kreisprozess, insbesondere einen ORC, mit einem oder mehreren Wärmeübertragern zum Übertragen von Wärme von einer oder mehreren dynamischen Wärmequellen auf ein Arbeitsmedium des thermischen Kreisprozesses; und
   einen Mikroprozessor konfiguriert zum Durchführen des Verfahrens nach einem der Ansprüche 1 bis 8 zum Regeln des thermischen Kreisprozesses.

10. Computerprogrammprodukt, umfassend wenigstens ein computerlesbares Medium mit durch einen Computer ausführbaren Anweisungen zum Durchführen der Schritte des Verfahrens nach einem der Ansprüche 1 bis 8 beim Betrieb auf einem Computer.

**Claims**

1. Method for controlling a thermal cyclic process, in particular an Organic Rankine Cycle (ORC), which is operated with a working medium in conjunction with a dynamic heat source, comprising:

   (a) determination of a setpoint value of a process variable of the thermal cyclic process from a value of an input parameter or respective values of a plurality of input parameters of the thermal cyclic process;
   (b) control of the thermal cyclic process with the determined setpoint value of the process variable as a target variable of the control; and
   (c) repeated execution of steps (a) and (b) when at least one value of the input parameters changes;

   wherein the input parameter comprises or the input parameters comprise a mass flow of a gas from the heat source or a quantity that is representative for this mass flow and / or a temperature of the exhaust gas and / or a temperature of the outside air and / or a condensation temperature of the working medium of the cyclic process; and
   wherein the process variable is or the process variables are the vaporisation temperature or the vaporisation pressure of the working medium and / or the condensation temperature or the condensation pressure in a condenser of the thermal cyclic process and / or the vapour temperature or the vapour pressure at the outlet of an expansion machine of the thermal cyclic process.

2. Method according to Claim 1 wherein the determination of the setpoint value of the process variable of the thermal cyclic process comprises a calculation of the setpoint value from a predetermined function, particularly from a polynomial function, into which the input parameters are input as variables, or wherein the determination of the setpoint value of the process variable of the thermal cyclic process comprises a reading of the setpoint value from a predetermined table depending on a value of an input parameter or on respective values of a plurality of input parameters of the thermal cyclic process, wherein preferably there is interpolation or extrapolation between the table values.

3. Method according to Claim 2 with, carried out before the step (a), the additional step:

   designation of the function for calculating the setpoint value of the process variable by means of carrying out trials and / or from model equations, or designation of the table for determining the setpoint value of the process variable by means of carrying out trials and / or from model equations.

4. Method according to Claim 3 wherein the designation of the function for calculating the setpoint value of the process variable comprises a maximisation of the product of an efficiency of the heat transfer from the heat source to the cyclic process and an efficiency of the cyclic process, or wherein the designation of the table for determining the setpoint value of the process variable comprises a maximisation of the product of an efficiency of the heat transfer from the heat source to the cyclic process and an efficiency of the cyclic process.

5. Method according to one of the Claims 1 to 4 wherein at least one further process variable is controlled in a corresponding manner.

6. Method according to one of the Claims 1 to 5 wherein the control of the thermal cyclic process is carried out by means of model predictive control (MPC).

7. Method according to one of the Claims 1 to 6 wherein the control of the thermal cyclic process takes place by means of setting a rotational speed of a feeding pump and / or of an expansion machine and / or of a condenser fan.

8. Method according to one of the Claims 1 to 7 wherein the control comprises a repeated or continuous comparison of an actual value with the setpoint value of the process variable.

9. Device comprising:

a thermal cyclic process, in particular an ORC, with one or more heat exchangers for transferring heat from one or more dynamic heat sources to a working medium of the thermal cyclic process; and
a microprocessor configured for carrying out the method according to one of the Claims 1 to 8 for controlling the thermal cyclic process.

10. Computer program product comprising at least one computer-readable medium with instructions that can be executed by a computer and that are for carrying out the steps of the method according to one of the Claims 1 to 8 during operation on a computer.


**Revendications**

1. Procédé de régulation d'un système à cycle thermique, notamment un système à cycle organique de Rankine (ORC), que l'on fait fonctionner avec un fluide de travail et en liaison avec une source de chaleur dynamique, le procédé comprenant :

(a) la détermination d'une valeur de consigne d'une grandeur de processus du système à cycle thermique, à partir d'une valeur d'un paramètre d'entrée ou de valeurs respectives de plusieurs paramètres d'entrée du système à cycle thermique ;
(b) la régulation du système à cycle thermique à l'aide de la valeur de consigne déterminée de la grandeur de processus en tant que grandeur cible de la régulation ; et
(c) l'exécution répétée des étapes (a) et (b) lors de la variation d'au moins une valeur des paramètres d'entrée ;

procédé
d'après lequel le ou respectivement les paramètres d'entrée comprend ou respectivement comprennent un débit massique d'un gaz de la source de chaleur ou bien une grandeur représentative de ce débit massique, et/ou une température du gaz, et/ou une température de l'air extérieur, et/ou une température de condensation du fluide de travail du système à cycle thermique ; et d'après lequel la grandeur de processus ou respectivement les grandeurs de processus est ou respectivement sont la température d'évaporation ou la pression d'évaporation du fluide de travail, et/ou la température de condensation ou la pression de condensation dans un condenseur du système à cycle thermique, et/ou la température de vapeur ou la pression de vapeur à la sortie d'une machine de détente du système à cycle thermique.

2. Procédé selon la revendication 1, d'après lequel la détermination de la valeur de consigne de la grandeur de processus du système à cycle thermique comprend un calcul de la valeur de consigne à partir d'une fonction prédéterminée, notamment une fonction polynôme, dans laquelle les paramètres d'entrée entrent en tant que variables ; ou bien d'après lequel la détermination de la valeur de consigne de la grandeur de processus du système à cycle thermique comprend la lecture d'une valeur de consigne dans un tableau prédéterminé, en fonction d'une valeur d'un paramètre d'entrée ou de valeurs respectives de plusieurs paramètres d'entrée du système à cycle thermique, une interpolation ou une extrapolation étant de préférence faite entre les valeurs du tableau.

3. Procédé selon la revendication 2, comprenant l'étape supplémentaire suivante, effectuée avant l'étape (a) :

la détermination de la fonction pour le calcul de la valeur de consigne de la grandeur de processus, par la réalisation d'essais et/ou à partir d'équations de modèles ; respectivement la détermination du tableau pour déterminer la valeur de consigne de la grandeur de processus, par la réalisation d'essais et/ou à partir d'équations de modèles.

4. Procédé selon la revendication 3, d'après lequel la détermination de la fonction destinée au calcul de la valeur de consigne de la grandeur de processus, comprend une maximisation du produit d'un rendement de la transmission de chaleur de la source de chaleur au système à cycle thermique par le rendement du système à cycle thermique ; respectivement d'après lequel la détermination du tableau pour déterminer la valeur de consigne de la grandeur de processus, comprend une maximisation du produit d'un rendement de la transmission de chaleur de la source de chaleur au système à cycle thermique par le rendement du système à cycle thermique.

5. Procédé selon l'une des revendications 1 à 4, d'après lequel au moins une autre grandeur de processus est régulée de manière correspondante.

6. Procédé selon l'une des revendications 1 à 5, d'après lequel la régulation du système à cycle thermique est effectuée par une régulation à modèle prédictif (MPC).

7. Procédé selon l'une des revendications 1 à 6, d'après lequel la régulation du système à cycle thermique est effectuée par le réglage d'une vitesse de rotation d'une pompe d'alimentation et/ou d'une machine de détente et/ou d'un ventilateur de condenseur.

8. Procédé selon l'une des revendications 1 à 7, d'après lequel la régulation comprend une comparaison répétée ou continue d'une valeur réelle instantanée avec la valeur de consigne de la grandeur de processus.

9. Dispositif comprenant :

   un système à cycle thermique, notamment un système à cycle organique de Rankine (ORC), avec un ou plusieurs systèmes de transmission de chaleur pour transmettre de la chaleur d'une ou de plusieurs sources de chaleur dynamiques à un fluide de travail du système à cycle thermique ; et
   un microprocesseur configuré pour la mise en oeuvre du procédé selon l'une des revendications 1 à 8 pour réguler le système à cycle thermique.

10. Produit de programme d'ordinateur, comprenant au moins un support lisible par ordinateur, avec des instructions pouvant être exécutées par un ordinateur, pour la mise en oeuvre des étapes du procédé selon l'une des revendications 1 à 8, lors de son fonctionnement sur un ordinateur.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009099667 A1